# EUROPEAN PATENT APPLICATION

(11) **EP 1 154 380 A1**
(43) Date of publication of application: **14.11.2001**
(21) Application number: 00109990.2
(22) Date of filing: 11.05.2000
(51) Int. Cl.: G06T 17/40

(54) **A method of simulating a fly through voxel volumes**

(71) Applicant: MTT Medical Technology Transfer AG, 1705 Freiburg (CH)
(72) Inventor: Davey, Mark K., Beckenham, Kent BR3 4AZ (GB)
(74) Representative: Grünecker, Kinkeldey, Stockmair & Schwanhäusser Anwaltssozietät

(57) **Abstract**

A method of visualizing a simulated fly through a source volume, comprising the steps of obtaining a three-dimensional data set defining said source volume in a voxel-wise manner by assigning to each voxel at least one value representing a measure of a physical characteristic of the corresponding section of the source volume, choosing a viewing direction with respect to the source volume, performing volume slicing into a predetermined number **N** of parallel slices, wherein **N** is significantly smaller than a number **M** of possible parallel slices corresponding to unlimited volume slicing through the entire source volume, the parallel slices being orthogonal to the viewing direction, each slice being represented by an image obtained by processing said three-dimensional data set, the first, i. e. the upmost, slice being determined by a start position, performing volume rendering to build up a volume rendered 3D-image formed of **N** superimposed images corresponding to said **N** volume slices resulting in a viewing volume that is a comparatively small portion of the whole source volume, displaying the volume rendered 3D-image, and simulating a fly through said source volume by repeating the volume slicing and volume rendering with continuously differing start positions.

## Description

The present invention relates generally to volume rendering techniques and, more specifically, to a method of visualizing a simulated fly through a source volume according to the preamble part of claim 1.

Volume rendering techniques are dedicated to the manipulation and display of volumetric data. Volumetric data is data that describes characteristics, such as medical, seismic or fluid-related characteristics of a volume. In the following, volumetric data describing medical characteristics of a volume being a human body will be referred to as medical data.

The manipulation and three-dimensional (3D) visualization of medical data is becoming increasingly important for diagnostic tasks, operational pre-planning, and intra-operative support. Current techniques process and integrate data obtained from Computer Tomography (CT)-processes and/or Magnetic Resonance Image (MRI)-processes performed on human bodies into medical data sets describing the respective human body. These medical data sets are processed and 3D data sets are constructed therefrom in a voxel-wise manner comprising voxels, which represent together the entire volume of the human body that has been subjected to a CT- and/or MRI-process. To each voxel are assigned values, such as brightness, opacity or color, representing measures of physical characteristics obtained by analyzing and processing said medical data sets. For generating 3D images from voxels contained in these 3D data sets, the above-mentioned volume rendering techniques are used.

An efficient volume rendering technique consists in volume slicing, wherein the volumetic data of a corresponding volume to be visualized is sampled in parallel slices orthogonal to a viewing direction. Each of the slices is represented by an image obtained by processing the volumetric data set. Superimposing all images corresponding to the volume to be visualized results in generating a volume rendered 3D-image of the volume.

A system for performing volume rendering is the OpenGL ® Volumizer from Silicon Graphics, Inc. Volumizer is a volume rendering application programming interface built upon the OpenGL ® graphics libraries from Silicon Graphics, Inc., that has been designed to give a set of routines for rendering volumetric data, especially on Silicon Graphics machines utilizing dedicated graphics hardware to provide real time rendering rates. Volumizer uses the volume slicing technique, which is able to make full use of the texture-mapping hardware that many workstations now possess. The volume slices obtained by volume slicing can be considered as semi-transparent, texture-mapped polygons, which are then rendered in the correct order using appropriate blending functions and look up tables. User-defined color palettes can be loaded to change the appearance of the volume. These palettes can then interactively be manipulated to change e. g. the opacity, brightness and color assigned to a voxel.

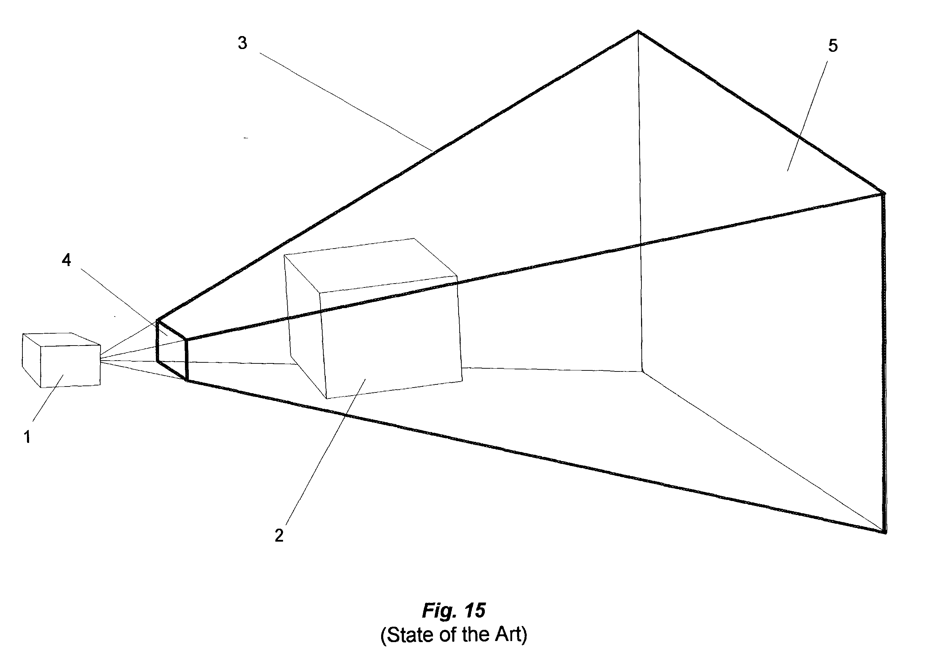

The volume rendering technique applied in is the OpenGL ® Volumizer from Silicon Graphics, Inc. is illustrated in Fig. 15. Fig. 15 shows a camera 1 that is used to illustrate a chosen viewing direction with respect to a source volume 2, wherein said source volume 2 must be placed into a respective perspective viewing volume 3 of said camera 1, so that volumetric data may be obtained from the source volume 2. The perspective viewing volume 3 consists of a volume limited by a near viewing plane 4 and a far viewing plane 5, wherein the near viewing plane 4 is the nearest viewing plane that said camera 1 may resolve. Thus, the appropriate size of the perspective viewing volume 3 is determined by the performance of the camera 1. When rendering the source volume 2, volume slicing is performed on the source volume 2 within the perspective viewing volume 3 that is then rendered using an appropriate rendering technique.

A major inconvenience of volume slicing and rendering according to Fig. 15 consists in requiring extensive calculation operations resulting in important time delays, so that an applicability of this technique in time critical applications, such as manipulation and 3D visualization of medical data in intra-operative support, is not possible.

Furthermore, in intra-operative support it may be desirable to navigate around a human body or parts thereof, e. g. the head, represented by a displayed 3D-image in a manner that is intuitively similar to flying, so that the volume can be approached and entered, whereby internal structures are made visible that otherwise would not be possible to see. In order to guarantee the applicability of such a simulated fly around or through the human body in intra-operative support, it must necessarily be performed in real time.

Such a fly through the head of a human body, or a volume in general, may be simulated by displaying a sequence of volume rendered 3D-images along a flying path. Thus, when flying, the corresponding volume rendered 3D-images must continuously be determined by superimposing the respective volume slices.

It is therefore the object of the present invention to provide for a method of allowing the visualization of a simulated flight through a volume in real time.

This object is solved by the subject matter of independent claim 1.

Preferred embodiments are defined by the dependent claims.

The present invention provides a method of visualizing a simulated fly through a source volume, comprising the steps of obtaining a 3D data set defining said source volume in a voxel-wise manner by assigning to each voxel at least one value representing a measure of a physical characteristic of the corresponding section of the source volume, choosing a viewing direction with respect to the source volume, performing volume slicing into a predetermined number N of parallel slices orthogonal to the viewing direction, wherein N is significantly smaller than a number M of possible parallel slices corresponding to unlimited volume slicing through the entire source volume and wherein each slice is represented by an image obtained by processing said 3D data set, the first, i.e. the upmost slice being determined by a start position. Then volume rendering is performed to build up a volume rendered 3D-image formed of N superimposed images corresponding to said N volume slices resulting in a viewing volume that is a comparatively small portion of the whole source volume. Finally, the volume rendered 3D-image is displayed and a fly through said source volume is simulated by repeating the volume slicing and volume rendering with continuously differring start positions.

A major advantage of such a method of visualizing a simulated fly through a source volume is to provide for a simulated fly through in real time by means of improved volume rendering speed.

According to a preferred embodiment of the present invention, the volume rendered 3D-image is displayed on a dark background that is preferably black and the n-th image until the N-th image (1 < n < N ), corresponding to the N - n most distant volume slices from the start position within the N superimposed images forming the volume rendered 3D-image, are continuously faded to the background color. Furthermore, said fading to the background color is preferably performed by means of fogging beginning at the n-th image, wherein n is equal to N/2. Of course, any other fraction is also possible. Furthermore, the fading acts as a means of depth enhancement so that objects closer to the start position are generally brighter than those further away, thereby improving the contrast of the image, while dark areas within otherwise bride regions indicate the possible presence of holes in the source volume.

A major advantage of performing the fading by means of fogging is to make the fog invisible for at the start position and making the fog gradually become more dense as it moves away from said start position until it becomes completely opaque in the most distant volume slice.

According to another preferred embodiment of the present invention, the source volume is at least a part of a human body, e.g. the head, and the volumetric data describing the at least part of said human body is obtained by means of a CT-process and/or a MRI-process.

According to a further preferred embodiment of the present invention, the volume rendered 3D-image is displayed together with three two-dimensional images corresponding to volume slices, wherein the two-dimensional images are orthogonal to each other. Furthermore, the volume rendered 3D-image may be replaced by a 3D-image representing the source volume. Another possibility consists in displaying the volume rendered 3D-image, the three two-dimensional images corresponding to volume slices and the 3D-image representing the source volume together on a display.

In such a display indicating a current position in the source volume when simulating a fly through said source volume is achieved by means of cross-hairs. Therefore, a cross-hair is displayed in each of the three two-dimensional images, wherein the cross hair in each image is respectively positioned at the point of intersection of said three two-dimensional images in order to indicate said current position. In particular the three two-dimensional images may represent a coronal, an axial and a sagittal view of a corresponding source volume. Additionally, at any time the cross-hairs may be manually placed in one of the three two-dimensional images at an arbitrarily chosen position in order to position the start position of a simulated fly through at said position within the source volume, wherein the viewing direction remains the same before and after re-positioning.

A major advantage thereof is to allow an efficient application of the present method for purposes of diagnosis and operational pre-planning and to enable for a simple navigation within the source volume.

According to still another preferred embodiment of the present invention, a sufficient number of path positions is saved in a memory when simulating a fly through a source volume. These path positions correspond to volume rendered 3D-images that are displayed during fly through to thereby define the path along which the fly through occurred. Alternatively, the path positions consist of the position and orientation information for both the camera and the source volume. These path positions can then be used to generate rendered 3D images at a later time. Thus, it is possible to retrace the current path back to a previous path point. This is especially useful if mistakes have been made by flying through a source volume, so that a return to a previous position is required.

Furthermore, the saved fly through path positions can be read from the memory when required and restored for review and teaching purposes. The saving of the sufficient number of path positions may comprise saving the 3D coordinates of said path positions as well as saving the respective viewing directions.

According to still another preferred embodiment of the present invention, a guided fly through said source volume may be simulated by reading from the memory the saved path positions defining the path along which the fly through occurred and by determining the deferring start positions according to said path positions, wherein it may be possible to switch from the guided fly through to a non-guided fly through.

According to a further preferred embodiment of the present invention, a path position may arbitrarily be selected for displaying the volume rendered 3D-image corresponding to the selected path position. Then, a comment with respect to a characteristic of the displayed volume rendered 3D-image at said path position may be inputted, whereby said comment will be stored in the memory in relation with said path position.

A major advantage of such a fixing of comments to specific path positions consists in applicability for diagnostic tasks, operational pre-planning or teaching purposes, permitting to reading when desired the comments stored in relation with said path positions and displaying the volume rendered 3D-image corresponding to the selected path position together with said comment, so that e.g. during a guided fly through a source volume a description of the path is directly provided.

According to another preferred embodiment of the present invention, a fill function, such as flood filling, may be performed on a 3D image. Therefore, an initial position is determined in said 3D image so that performing said fill function begins with the voxel at said initial position and continues to adjacent voxels.

At each voxel it is determined whether said voxel fulfills a certain filling condition and if said filling condition is fulfilled, the color assigned to the voxel is changed to a predetermined color. Then, the positions of those voxels that fulfill said filling condition are determined as being the initial positions, so that performing said fill function may be repeated. Thus, when no more adjacent voxels fulfills said filling condition, performing said fill function is stopped.

In particular, the first determined initial position may correspond to a marker placed at a point on the path. Furthermore, a group of adjacent voxels whose assigned colors have been changed to the predetermined color represent together a filled volume in the source volume, so that counting the number of these voxels and summing up the associated volumes results in determining the size of the corresponding filled volume.

A major advantage of determining volumes in this manner consists in enabling for determining the volume of e.g. tumors in a human head, so that an efficient diagnosis and operational pre-planning may be guaranteed.

According to still another preferred embodiment of the present invention, two different positions in a volume rendered 3D-image may be selected, which represent two locations in the corresponding source volume. Then, marks are created and displayed in the volume rendered 3D-image corresponding to the selected positions and a connection line between the two marks is further displayed. The two locations in the corresponding source volume may be determined, which correspond to the positions of the two marks in the volume rendered 3D-image, so that the distance between the two different locations in the source volume may be determined and displayed.

The present invention will be described further, by way of examples, with reference to the accompanying drawings. The drawings represent:
- Fig. 1: an illustration of a truncated perspective viewing volume used for volume rendering in a simulated fly through according to the present invention;
- Fig. 2: an illustration of a clip plane view according to the present invention;
- Fig. 3: an illustration of an initial display from a fly-through, using unlimited volume slicing;
- Fig. 4: an illustration of a display during a fly-through;
- Fig. 5: an illustration of a volume rendered 3D-image formed of N super imposed images corresponding to N volume slices;
- Fig. 6: an illustration of the volume rendered 3D-image of Fig. 5, displayed on a black background after fogging;
- Fig. 7: an illustration of a volume rendered 3D-image displayed on a black background after fogging, comprising a representation of saved path positions;
- Fig. 8: a 3D-image representing the source volume comprising marks indicating a path of an occurred fly through;
- Fig. 9: an illustration of the image of Fig. 8, wherein a path position has been selected as initial position for performing a fill function;
- Fig. 10: an illustration of the 3D-image according to Fig. 8 and 9 after performing a fill function;
- Fig. 11: an illustration of the filled volume of the 3D-image according to Fig. 8 to 10;
- Fig. 12: an illustration of determining a distance between two different locations in a source volume;
- Fig. 13: an illustration of a virtual deletion of a part of a source volume with a virtual tool;
- Fig. 14: an illustration of a virtual tool used for virtually working on the displayed 3D-image; and
- Fig. 15: an illustration of a standard viewing volume used to render data according to the state of the art.

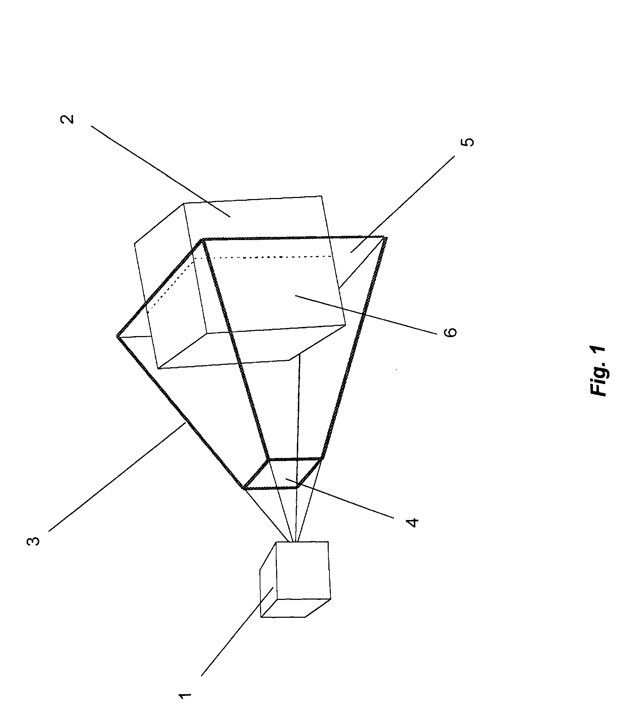

Fig. 1 shows a camera 1 that is used to illustrate a chosen viewing direction with respect to a source volume 2, wherein said source volume 2 is placed into a perspective viewing volume of said camera 1, so that volumetric data describing the source volume 2 may be obtained. In more detail, said camera 1 may be represented by the display screen. The perspective viewing volume consists of a truncated viewing volume 3 according to a preferred embodiment of the present invention, limited by a near viewing plane 4 and a far viewing plane 5, wherein the near viewing plane 4 is the nearest viewing plane that said camera 1 may resolve. The far viewing plane 5 is a viewing plane that is arbitrarily chosen to render only a part 6 of the entire source volume 2. Thus, only a part 6 of the source volume 2 falls within said truncated viewing volume 3 that is rendered. The result is that fewer volume slices are rendered than in unlimited volume slicing and therefore an increased rendering speed is achieved. The appropriate size of the viewing volume 3 is determined by the application, but a user may alter the depth of the viewing volume 3 if required.

That means that according to another preferred embodiment of the present invention, it is possible to determine said depth of the viewing volume 3 to perform a limited volume slicing while simulating a fly through a human body. Furthermore, when the fly through the human body is stopped, the volume slicing becomes automatically unlimited, so that the user may have a more detailed view.

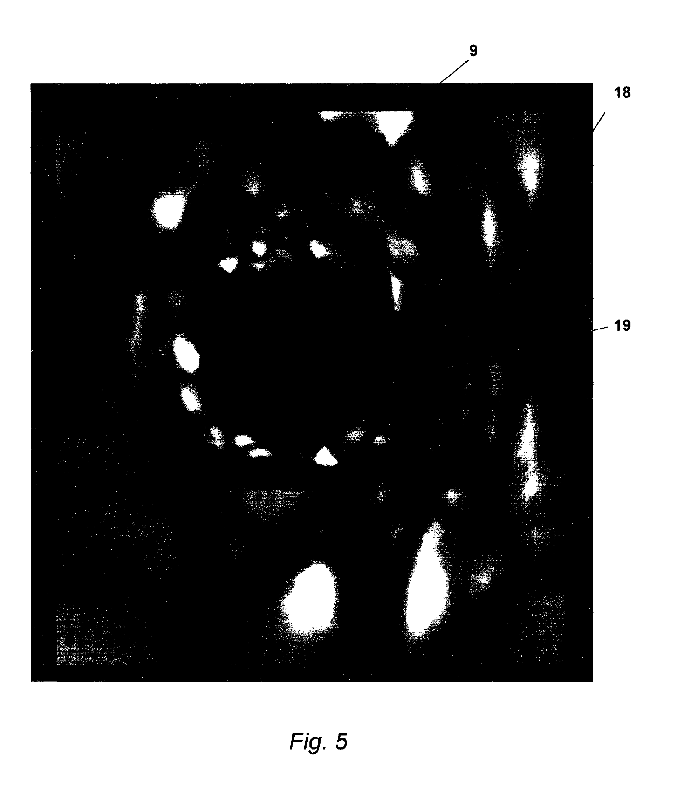

When rendering medical data, such a truncated viewing volume 3 may e.g. result in an unnatural truncation of vessels and other spaces that are being navigated in a simulated fly through according to the present invention, as rendering of the medical data set, i.e. the source volume 2, is only performed over a part 6 of said source volume 2. An example of such an unnatural truncation of vessels can be seen in Fig. 5, wherein a volume rendered 3D-image of a carotid is shown.

In order to overcome the problem of unnatural truncation, a technique is used that ensures that the volume rendered 3D-image fades to black as the plane furthest from the camera 1, i.e. the far viewing plane 5, is approached. In this way, sudden truncations are avoided. Furthermore, the fading technique acts as a means of depths enhancement, as objects closer to the camera 1 are generally brighter than those further away, therefore, improving the contrast of the image while dark areas within otherwise bright regions indicate the possible presence of holes.

A major advantage of a reduced viewing volume 3 consists in rendering only a part 6 of the source volume, so that volume slicing into parallel slices orthogonal to the viewing direction determined by the camera 1 must only be performed on said part 6 of the entire source volume 2, thereby improving rendering speed and permitting visualising a simulated fly through said source volume 2 in real time.

The default method of moving the camera 1 around a human body being the source volume 2, displayed in form of a 3D-image, is with the mouse. Placing the cursor in the center of the viewing area 9 of said 3D-image and continuing pressing the middle mouse button results in constant motion along a positive z-axis in the camera's coordinate system, i. e. in the viewing direction, while motion along the negative z-axis is achieved with a keyboard toggle. If, while the middle mouse button is pressed, the cursor is moved away from the center position of this viewing area 9, the direction of the camera 1 is modified. By moving the cursor to a region in the viewing area 9, that is not the center of said viewing area 9, while the middle mouse button is pressed, the camera 1 will gradually turn toward that region and move towards it. This has the effect of moving the region of interest to the center of the viewing area 9. The left mouse button is used to rotate the camera 1 with no linear movement. A virtual trackerball may be used to provide three degrees of rotation for the camera using just the two-dimensional mouse. Finally, the right mouse button provides pure translation along the y-axis in the camera coordinate system.

Furthermore, in addition to the use of the mouse for camera navigation, a polhemus tracking device can be used to provide a more intuitive navigational tool. This system allows an objects position and orientation to be accurately tracked in 3D space using the transmission and detection of three orthogonal electromagnetic fields. The object to be tracked is in the shape of a stylus containing an integrated switch. At the beginning of the navigation, the current position and orientation of the stylus is recorded to calibrate it with the camera 1. Pressing the switch on the stylus begins translational motion of the camera 1, while altering orientation of the stylus changes the direction of the camera 1. Again, motion along the negative z-axis is achieved using a keyboard toggle.

The above described depth enhancement technique may be implemented according to the fog component of the Silicon Graphics, Inc., OpenGL ® Volumizer. Said fog setting is chosen to make the fog invisible at the camera 1 and to make it gradually become more dense as it moves away from the camera 1 until it becomes completely opaque at the far viewing plane 5 of the small rendering volume 6.

The source volume 2 to be rendered may be obtained by means of a CT-process and/or MRI-process performed at least on a part of a human body, to create a medical data set that is analyzed and processed to generate a 3D-data set defining said at least part of a human body in a voxel-wise manner by assigning to each voxel at least one value representing a measure of a physical characteristic, like opacity, brightness or color of the corresponding section of the human body, as measured. In the following step, a viewing direction with respect to the source volume 2 is determined. Then, according to said viewing direction and optionally after selecting the depth of the volume 6 to be rendered, which may be a predetermined default depth, said volume 6 to be rendered, which is inside the viewing volume 3, is subjected to a volume slicing. The volume slicing consists in determining parallel slices of said part 6 of the source volume 2 that are orthogonal to the viewing direction, each slice being represented by an image obtained by processing said 3D data set, whereby the first, i.e. the upmost slice is determined by a start position. The start position would generally depend on the relative position of the source volume 2 with respect to the camera 1. Furthermore, as the viewing volume 3 comprises only the part 6 of the source volume 2, the volume slicing is limited to a predetermined number N of parallel slices, wherein N is significantly smaller than a number M of the possible parallel slices corresponding to unlimited volume slicing through the entire source volume 2. Then, in order to built up a volume rendered 3D-image, volume rendering is performed and the N images corresponding to said N volume slices are superimposed so that a volume rendered 3D-image of the part 6 of the source volume 6 may be displayed.

For simulating a fly through said source volume 2, the volume slicing and volume rendering are continuously repeated with differring start positions, so that a flying path comprising the differring start positions is created and a sequence of different volume rendered 3D-images along said flying path is generated, thus giving an impression to a user that is intuitively similar to flying.

According to a preferred embodiment of the present invention, each volume rendered 3D-image is displayed on a dark background, preferably black, and the n-th image until the N-th image (1 < n < N), corresponding to the N - n most distant volume slices from the start position are faded to the selected background color in order to obtain an effect of depth enhancement within the volume rendered 3D-image, thus simulating unlimited volume slicing. The fading starts preferably with the n-th volume slice being the N/2 slice.

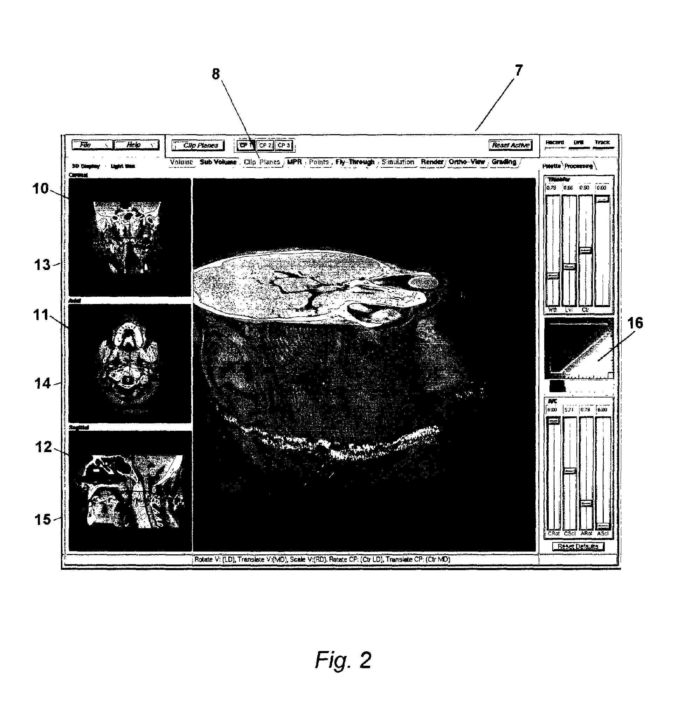

Figure 2 shows an interface 7 representing a preferred embodiment of the present invention, wherein a clip plane mode 8 has been selected. In the clip plane mode, a 3D-image 9 representing the source volume, in the present case the head of a human body, together with three two-dimensional images 10, 11, 12, wherein the image 10 represents a coronal view, the image 11 an axial view and the image 12 a saggital view with respect to a viewing position within the head of the human body.

Furthermore, these three two-dimensional images are orthogonal to each other with respect to a specific position that is indicated by cross-hairs 13, 14, 15 in the respective two-dimensional images. The term clip plane is to be understood as a method of slicing arbitrarily through the volume.

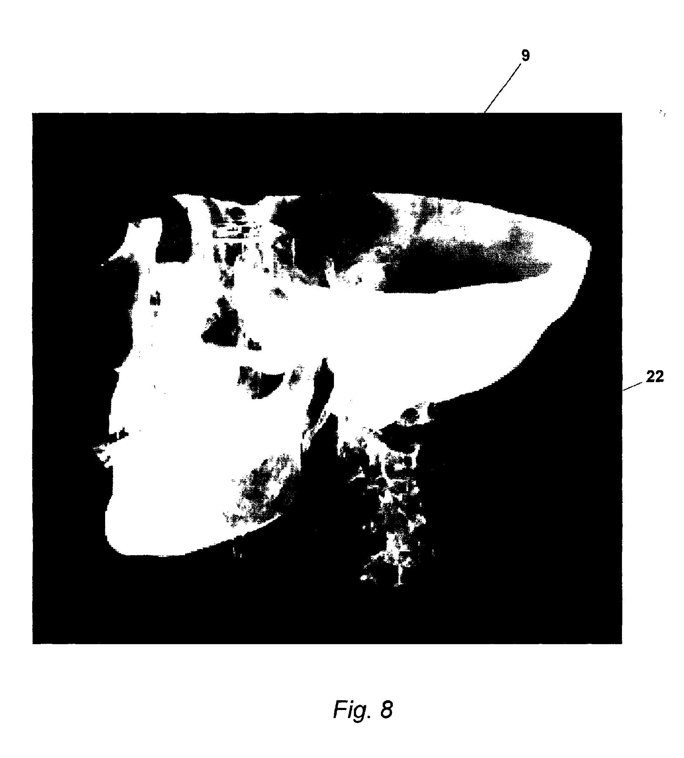

The window 16 is a control window, wherein the opacity assigned to the voxels forming in their totality the 3D data set representing the head may be tuned. For example, the opacity of voxels representing the skin of the displayed head may be tuned as being transparent, resulting in a display of the head according e.g. to Fig. 8, wherein only the skull can be seen.

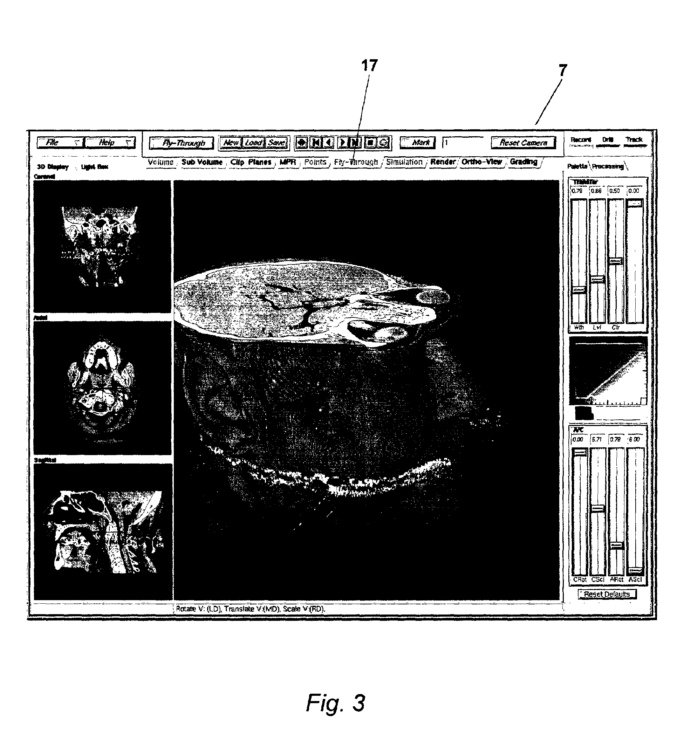

Figure 3 shows the interface 7 of Fig. 2, wherein a fly-through mode 17 has been selected for visualizing a simulated fly through the head.

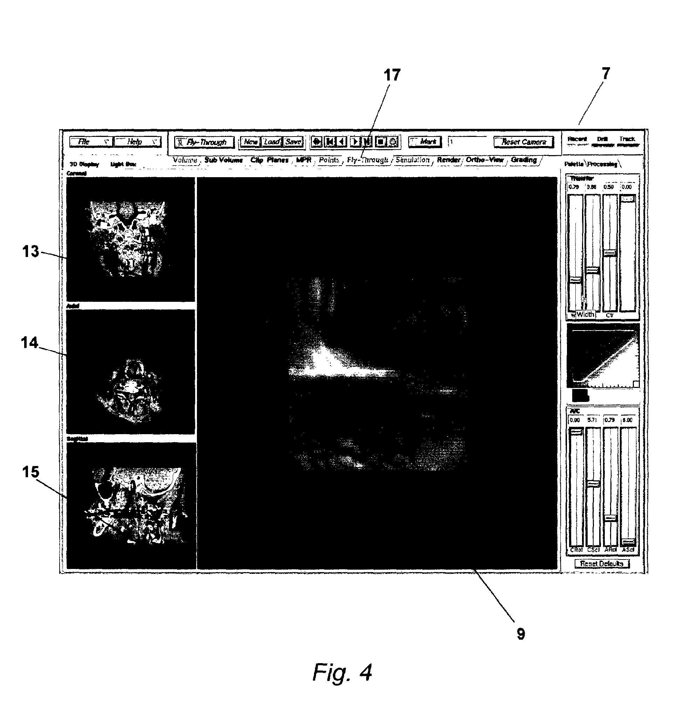

Figure 4 shows the interface 7 of Fig. 3, wherein the fly-through mode 17 has been set. In order to initialize the simulation of a fly-through, a first start position is indicated by using preferably one of the cross-hairs 13, 14, 15 that is positioned with the mouse pointer on a start position, at which the fly-through should begin. Another possibility for determining said start position is to choose a start position by pointing with the mouse pointer on a desired point within the 3D-imageon a clip plane as described above. Then, before or after choosing the start position, a viewing direction must be determined. This determination is performed in the present example by rotating the 3D-image of the head.

As illustrated in Fig. 4, cross-hairs 13, 14, 15 are positioned on a carotid, so that the simulated fly-through the carotid starts by displaying in the window 9 a volume rendered 3D-image of the carotid in the viewing direction.

Figure 5 shows the window 9 of the interface 7 of Fig. 4 comprising a volume rendered 3D-image representing the carotid, whereby the volume rendered 3D-image is formed of a certain number N of superimposed images corresponding to N volume slices, displayed on a bright background 18. In the present case, the volume rendering using N superimposed images according to the present invention results in a sudden truncation of the displayed carotid, as the bright background 18 can be seen in the continuation 19 of the displayed carotid.

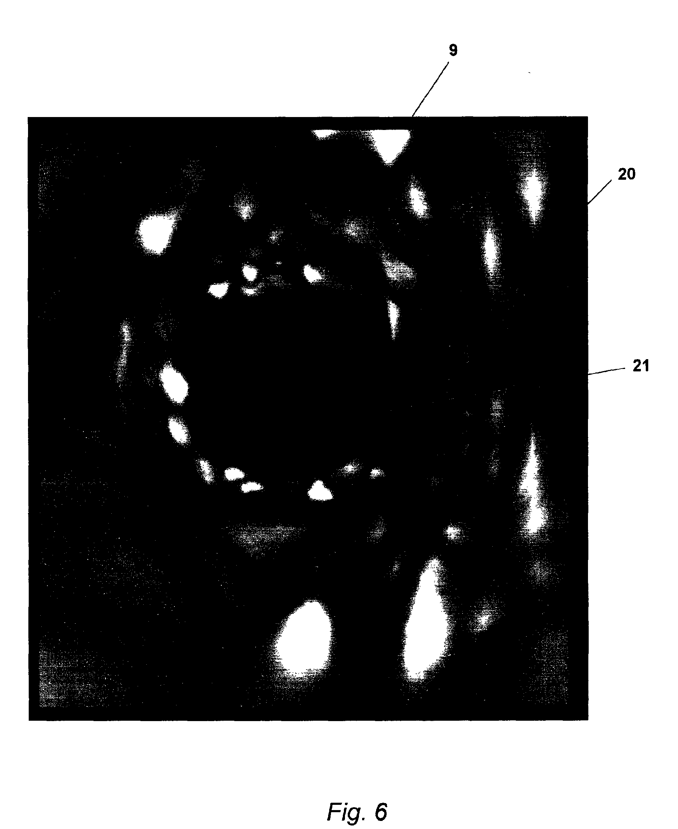

Figure 6 shows the window 9 of Fig. 4 comprising the volume rendered 3D-image of Fig. 5, wherein the sudden truncation as shown in Fig. 5 has been avoided. Therein, the volume rendered 3D-image is displayed on a dark background 20, preferably black, and the n-th image until the N-th image (1 < n < N), corresponding to the N-n most distant volume slices from the start position, are faded to said background color 20, i.e. to black in the present case. The number of n is preferably determined to N/2.

In this way, sudden truncation is avoided and furthermore, the fading technique acts as a means of depth enhancement. Thus, a user will have the impression that he may not see as far as the carotid goes, but only until a certain distance, whereby the black region 21 within the volume rendered 3D-image gives the impression, that there may be a hole.

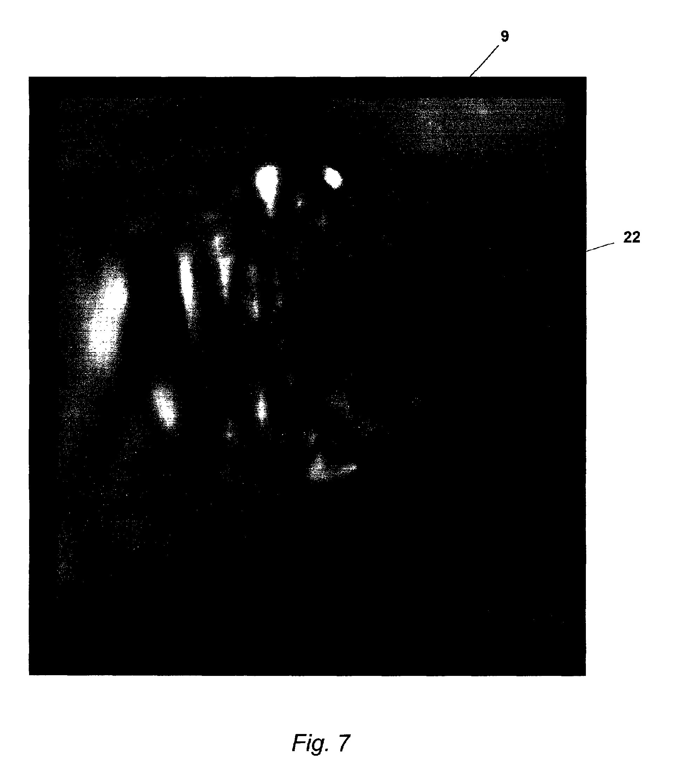

Figure 7 shows the window 9 of Fig. 4 comprising the volume rendered 3D-image of the carotid of Fig. 6, wherein a sufficient number of path positions 22, corresponding to volume rendered 3D-images that are displayed during the fly-through of the source volume, are saved in a memory, thus defining the path along which the fly-through occurred. These path positions 22 may be saved in form of 3D-coordinates of the corresponding path positions, wherein the relation of different path positions to each other determine the path and thus the corresponding viewing directions.

Nevertheless, it also possible to store said corresponding viewing directions together with the 3D coordinates describing the path positions.

A major advantage of saving said sufficient number of path positions 22 consists in enabling for simulating a guided fly-through the source volume by reading from said memory the saved path positions 22 defining the path along which the fly-through occurred and by determining the differring start positions according to said path positions for simulating said guided fly-through.

According to a preferred embodiment of the present invention, it is possible to switch at any moment from the guided fly-through to a non-guided fly-through.

While a major advantage of simulating a fly through a source volume in real time resides in the applicability for operative pre-planning, a major advantage of simulating a guided fly-through in real time resides in the applicability for an intra-operative support. Accordingly, a surgeon may use the guided fly through feature for planning an operation, such as the extraction of a cerebral tumor, and then use the guided fly-through when performing said operation. Furthermore, it may soon be possible that a surgeon plans such difficult operations like extraction of cerebral tumors by using guided fly throughs, wherein the operation itself would be executed by a roboter under control of such a guided fly through.

Another major advantage of enabling for a guided fly-through consists in teaching purposes. In this case, an experienced surgeon may prepare a fly through a human body destinated e.g. to students at the university. Furthermore, the students themselves may fly through a human body, so that part of medical education may now be done by means of simulation.

Therefore, according to another preferred embodiment of the present invention, it is possible to input comments with respect to characteristics of a displayed volume rendered 3D-image at a specific path position, whereby said comment is stored in the memory in relation with said path position. Thus, when performing a guided fly-through, the comment stored in relation with said specific path position is read when the guided fly through reaches said specific path position and then displayed. This allows for preparing a guided fly through for teaching purposes, wherein the experienced surgeon inputs the comments and e.g. a medical student may navigate himself along the prepared fly through path while reading the stored comments.

Figure 8 shows the window 9 of Fig. 4, wherein the 3D-image representing the head is displayed. Therein, the opacity assigned to the voxels representing in their totality the skin has been selected as being transparent, so that only the skull can be seen.

Furthermore, the path positions 22 defining the path along which the fly through occurred are displayed.

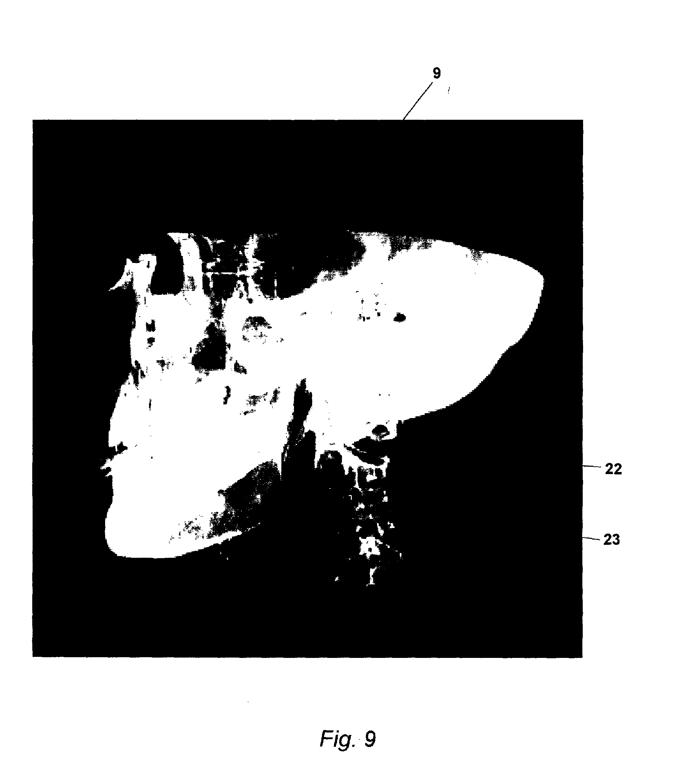

Figure 9 shows the window 9 of Fig. 4, wherein the image according to Fig. 8 is displayed. Furthermore, from all saved path positions 22, a specific path position 23 has been determined as an initial position for performing a fill function. Performing said fill function consists in beginning with the voxel at said initial position and continuing to adjacent voxels by changing the color assigned to those voxels that fulfill a filling condition to a predetermined color. Then, the positions of those voxels that fulfill said filling condition, i. e. their respective color has been changed, as initial positions for continuing the fill function described above. Thus, when no more adjacent voxel fulfills said filling condition, the fill functions stops.

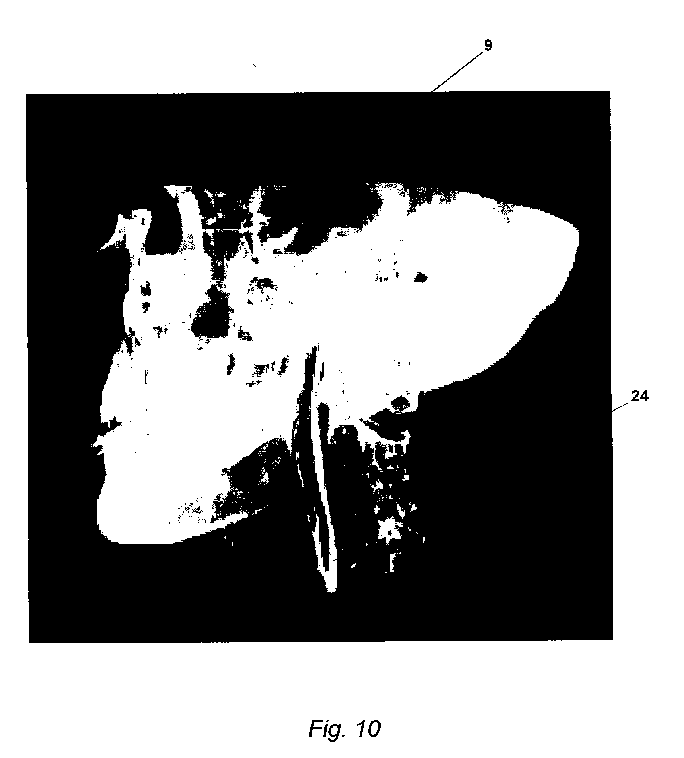

Figure 10 shows the window 9 of Fig. 4, wherein the image according to Fig. 8 and 9 is illustrated. More specifically, the fill function has been performed to fill the carotid 24 along which a fly through has been simulated.

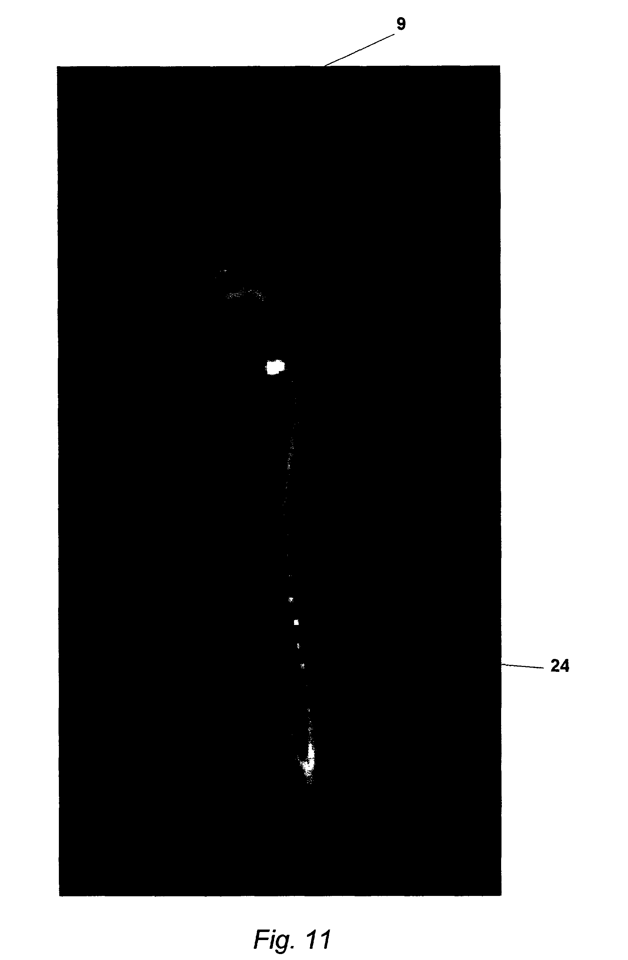

Figure 11 shows the window 9 of Fig. 4, displaying the filled carotid 24 of the human head. In the illustrated image according to Fig. 8 to 10, the opacity assigned to all voxels representing the head has been set to transparent except the opacity assigned to the voxels representing the filled carotid 24. Thus, only the filled carotid 24 can be seen on the illustrated 3D-image.

A major advantage of separating a filled volume from a source volume and displaying it separately consists in allowing for a separated and detailed examination of said filled volume. Thus, e.g. the number of voxels building said filled volume may be counted and by summing up the associated volumes of the counted number of voxels, the size of the corresponding filled volume in the source volume may be determined.

A major advantage thereof is that e.g. the size and weight of cerebral tumors may be determined with respect to operation pre-planning and execution.

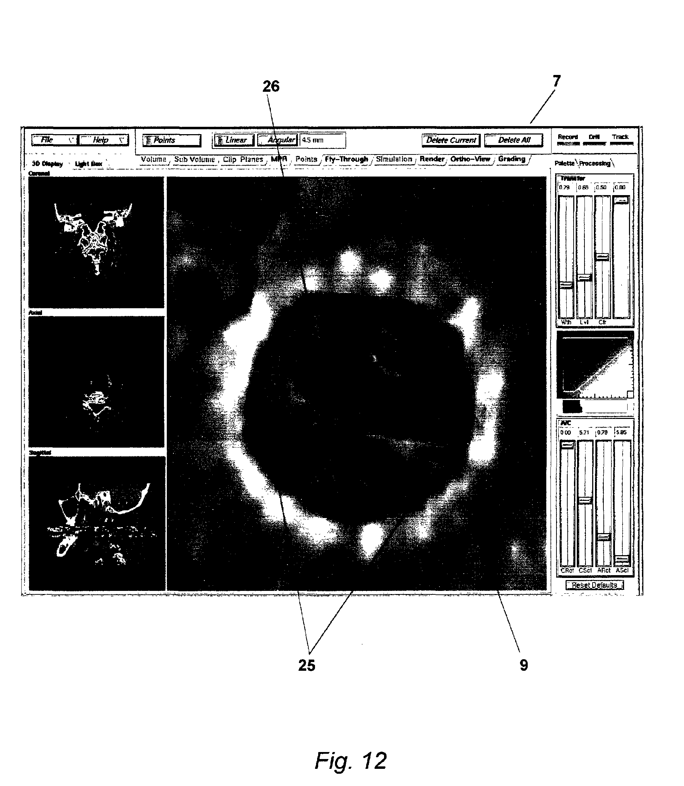

Figure 12 shows the interface 7 of Fig. 4 in the fly through mode, wherein the volume rendered 3D-image representing the start position of the simulated fly through is illustrated with unlimited volume slicing and rendering. In said volume rendered 3D-image representing an aortal bifurcation of the carotid, two marks 25 are displayed and a line 26 there between.

According to a preferred embodiment of the present invention, it is possible to measure distances within volume rendered 3D-images or other 3D-images by selecting two different positions 25 within the volume rendered 3D-image, wherein said positions represent specific locations in the corresponding carotid. Then, two marks 25 are created and displayed in the volume rendered 3D-image corresponding to the two different selected positions 25 and a connection line 26 between the two marks 25 is displayed. In a next step, the two locations in the carotid are determined, said locations corresponding to the positions of the two marks 25 in the volume rendered 3D-image, so that the distance between the two different locations in the carotid may be determined.

Thus, it is possible to determine distances between arbitrary chosen locations in human bodies, e.g. for diagnosis purposes.

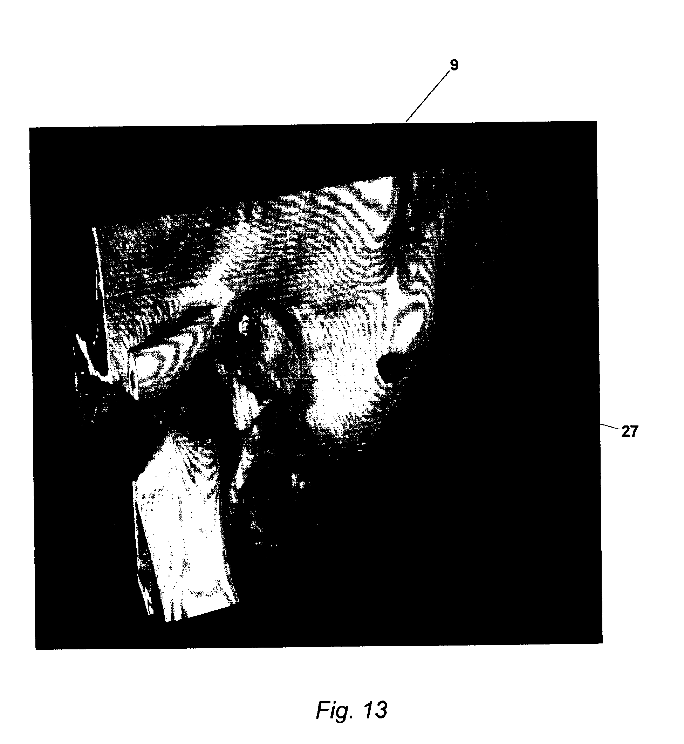

Figure 13 shows the window 9 of Fig. 4, illustrating a 3D-image of a part of a skull with a working tool 27. The working tool 27 preferably allows for operative pre-planning, wherein simulations may be executed in order to determine, how e.g. the skull should be milled at a certain location when a treatment of a stratum behind the bone is necessary. Therefore, the working tool 27 represents e. g. a milling cutter that is used for the deletion of the skull at the determined location. Application of said working tool 27 leads in fact to a "deletion" of displayed image data, without deleting the corresponding voxels in the 3D data set, so that only the display of the skull is modified.

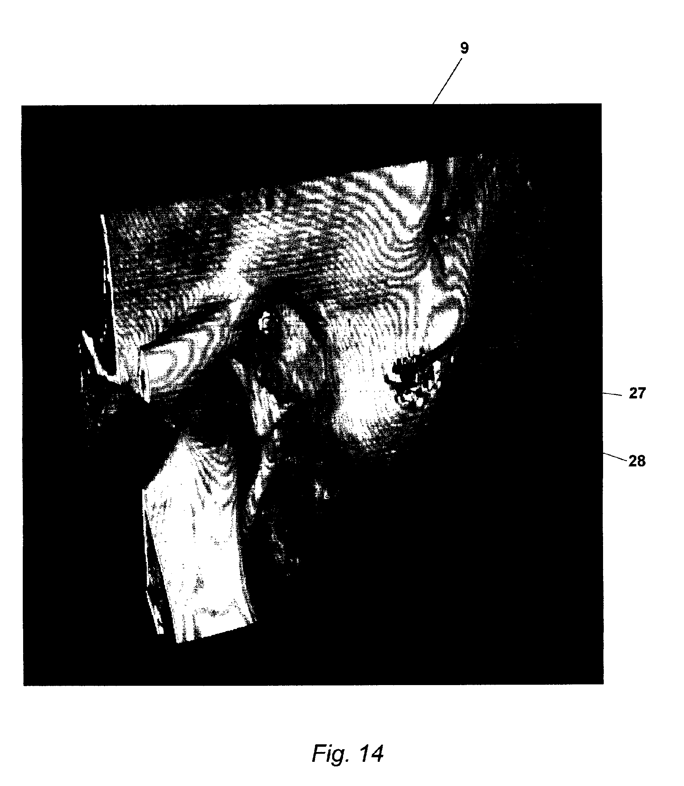

Figure 14 shows the window 9 of Fig. 4 illustrating the part of the skull represented in Fig. 13 and the working tool 27, that has been used to create a hole 28. In the present case, the working tool 27 may again represent a surgical drill used to drill a hole 28 into the skull.

A major advantage of simulating an operation in operative pre-planning consists in visualizing said operation on volume rendered 3D-images before realizing it. Thus, the surgeon may determine and optimize the gests that must be performed during the real operation. Furthermore, intra-operative tasks may be performed by monitoring steps to be executed by the surgeon.

## Claims

1. A method of visualizing a simulated fly through a source volume, comprising the steps of:
obtaining a three-dimensional data set defining said source volume in a voxel-wise manner by assigning to each voxel at least one value representing a measure of a physical characteristic of the corresponding section of the source volume,
choosing a viewing direction and/or position with respect to the source volume,
performing volume slicing into parallel slices orthogonal to the viewing direction, each slice being represented by an image obtained by processing said three-dimensional data set, the first, i. e. the upmost, slice being determined by a start position,
performing volume rendering to build up a volume rendered 3D-image formed of superimposed images corresponding to successive volume slices,
displaying the volume rendered 3D-image, and
simulating a fly through said source volume by repeating the volume slicing and volume rendering with continuously differing start positions,
**characterized in that**
the step of performing volume slicing comprises limiting said volume slicing to a predetermined number N of parallel slices, wherein N is significantly smaller than a number M of possible parallel slices corresponding to unlimited volume slicing through the entire source volume; and
the step of volume rendering comprises building up a volume rendered 3D-image formed of N superimposed images corresponding to said N volume slices resulting in a viewing volume that is a comparatively small portion of the whole source volume.

2. The method according to claim 1, **characterized by** further comprising the step of fading the n-th image until the N-th image (1 < n < N) corresponding to the N-n most distant volume slices from the start position continuously to a background color to obtain a volume rendered 3D-image that simulates unlimited volume slicing.

3. The method according to claim 2, **characterized in that** n = N/2.

4. The method according to claim 2 or 3, **characterized in that** the step of fading is performed by means of fogging.

5. The method according to one of the claims 1 to 4, **characterized in that** the volume rendered 3D-image is displayed on a dark background.

6. The method according to claim 5, **characterized in that** the dark background is black.

7. The method according to one of the claims 1 to 6, **characterized in that** the at least one value of each voxel that represents a measure of a physical characteristic is obtained by means of a CT-process.

8. The method according to one of the claims 1 to 6, **characterized in that** the at least one value of each voxel that represents a measure of a physical characteristic is obtained by means of a MRI-process.

9. The method according to one of the claims 1 to 6, **characterized in that** the at least one value of each voxel that represents a measure of a physical characteristic is obtained by combining data obtained by means of a CT-process and data obtained by means of a MRI-process.

10. The method according to one of the claims 7 to 9, **characterized in that** the source volume is at least a part of a human body.

11. The method according to one of the claims 1 to 10, **characterized by** further comprising the step of displaying together with said volume rendered 3D-image three two-dimensional images corresponding to volume slices, said three two-dimensional images being orthogonal to each other.

12. The method according to claim 11, **characterized in that** said three two-dimensional images corresponding to volume slices are displayed together with a three-dimensional image representing the source volume.

13. The method according to claim 11 or 12, **characterized in that** the step of simulating a fly through the source volume comprises indicating a current position in said source volume by means of a cross-hair in each of the three two-dimensional images, wherein the cross hair in each image is respectively positioned at the point of intersection of said three images to indicate the current position.

14. The method according to one of the claims 11 to 13, **characterized in that** the three two-dimensional images represent a coronal, an axial and a sagittal view of a corresponding source volume.

15. The method according to one of the claims 1 to 14, **characterized in that** the step of simulating a fly through the source volume comprises saving in a memory a sufficient number of path positions corresponding to volume rendered 3D-images that are displayed during the fly through to thereby define the path along which the fly through occured.

16. The method according to claim 15, **characterized in that** the saving of a sufficient number of path positions comprises saving three-dimensional coordinates of said positions.

17. The method according to claim 15 or 16, **characterized in that** the saving of a sufficient number of path positions comprises saving of respective viewing directions.

18. The method according to one of the claims 15 to 17, **characterized by** further comprising the step of simulating a guided fly through said source volume by reading from said memory the saved path positions defining the path along which the fly through occured and by determining the differing start positions according to said path positions.

19. The method according to claim 18, **characterized by** switching from the guided fly through to a non-guided fly through.

20. The method according to one of the claims 15 to 19, **characterized by** further comprising the steps of:
selecting a path position,
displaying a volume rendered 3D-image corresponding to the selected path position,
inputting a comment with respect to a characteristic of the displayed volume rendered 3D-image at said path position,
storing said comment in relation with said path position.

21. The method according to claim 20, **characterized by** further comprising the steps of:
selecting a path position,
reading the comment stored in relation with said path position,
displaying a volume rendered 3D-image corresponding to the selected path position, and
displaying said comment.

22. The method according to one of the claims 1 to 21, **characterized by** further comprising the steps of:
determining an initial position in a three-dimensional image representing the source volume for performing a fill function,
performing said fill function beginning with the voxel at said initial position and continuing to adjacent voxels by changing the color assigned to those voxels that fulfill a filling condition to a predetermined color, and
determining the positions of those voxels that fulfill said filling condition as initial positions and repeating the performing of said fill function.

23. The method according to claim 22, **characterized in that** the determined initial position corresponds to a saved path position.

24. The method according to claim 22 or 23, **characterized by** further comprising the steps of:
counting the number of voxels whose assigned colors have been changed to the predetermined color, said number of voxels representing together a filled volume in the source volume, and
summing up the associated volumes of the counted number of voxels to determine the size of the corresponding filled volume.

25. The method according to one of the claims 1 to 24, **characterized by** further comprising the steps of:
selecting two different positions in a volume rendered 3D-image, said positions representing two locations in the corresponding source volume,
creating and displaying marks in the volume rendered 3D-image corresponding
to the selected positions,
displaying a connection line between the two marks,
determining the two locations in the corresponding source volume that correspond to the positions of the two marks in the volume rendered 3D-image
and determining the distance between the two different locations in the source volume, and
displaying the determined distance.

26. A system for visualizing a simulated fly through a source volume, the system comprising a processor, a memory, a pointing device and a display, **characterized in that** the system utilises a method as claimed in any one of the claims 1 to 25.

27. A comuter-readable storage medium comprising computer-executable instructions for performing a visualization of a simulated fly through a source volume using a method as claimed in any one of the claims 1 to 25.
